# EUROPEAN PATENT APPLICATION

(11) **EP 3 889 347 A1**
(43) Date of publication of application: **06.10.2021**
(21) Application number: 21165449.6
(22) Date of filing: 29.03.2021
(51) Int. Cl.: D21H 17/28, B27N 3/04, B27N 3/08, C08L 1/02, C08L 3/02, D21J 1/00

(54) **COMPOSITE, MOLDED PRODUCT, AND METHOD FOR PRODUCING MOLDED PRODUCT**

(30) Priority: 30.03.2020 JP 2020059828
(71) Applicant: Seiko Epson Corporation, Tokyo 160-8801 (JP)
(72) Inventor: TANAKA, Hideki, Suwa-shi, Nagano 392-8502 (JP); NAKAI, Yoko, Suwa-shi, Nagano 392-8502 (JP); YOKOKAWA, Shinobu, Suwa-shi, Nagano 392-8502 (JP); HIGUCHI, Naotaka, Suwa-shi, Nagano 392-8502 (JP); SEKI, Shunichi, Suwa-shi, Nagano 392-8502 (JP)
(74) Representative: Miller Sturt Kenyon

(57) **Abstract**

A composite of the present disclosure, which is used as a raw material for dry molding, includes a cellulose fiber, and a starch, in which at least a part of the starch is fused to the cellulose fiber, and a content of the starch is 30.0% by mass or more and 50.0% by mass or less with respect to a total amount of the composite.

## Description

The present application is based on, and claims priority from JP Application Serial Number 2020-059828, filed March 30, 2020, the disclosure of which is hereby incorporated by reference herein in its entirety.

### BACKGROUND

### 1. Technical Field

The present disclosure relates to a composite, a molded product, and a method for producing a molded product.

### 2. Related Art

In former days, paper has been produced by a technique for papermaking using cellulose fibers, that is, a papermaking technique.

In such a papermaking method, cellulose fibers are entangled with each other by using a hydrogen bond between the cellulose fibers, and paper having sufficient strength is obtained through the bonding force.

However, in the papermaking method, it is necessary to use a large amount of water, and dehydration and drying are required during the production, so that energy and time consumption consumed for performing the papermaking method are very large. In addition, the water that has been used must be properly treated as water to be discharged. In addition, a device used in the papermaking method often requires large-scale utilities or infrastructures such as water, electric power, and water discharging facilities, and it is difficult to reduce sizes thereof.

Therefore, as a method that does not use a large amount of water as in the papermaking method of the related art, it is proposed that a method for producing a sheet by accumulating a mixture of dried cellulose fibers and a resin, and heating and pressurizing the accumulated mixture (for example, International Publication No. WO2018/043034).

In the method described in International Publication No. WO2018/043034, the strength of paper that is a sheet-shaped molded product is ensured by using a resin such as a polyester resin for binding the cellulose fibers to each other.

In recent years, it is demanded to suppress the use of petroleum-derived materials in order to deal with environmental problems and saving of underground resources.

On the other hand, in the disclosure described in International Publication No. WO2018/043034, a synthetic resin is used for binding cellulose fibers.

In order to respond to the above demands, natural materials such as a material derived from a plant may be used, but in the disclosure described in International Publication No. WO2018/043034, sufficient binding force cannot be obtained when simply using the natural material instead of a synthetic resin, and it is difficult to make sheet strength sufficiently excellent. When the natural material is used instead of the synthetic resin, processability is lowered in general, and there is a problem that heating temperature needs to be increased.

### SUMMARY

The present disclosure can be realized in the following aspects or application examples.

A composite according to this application example of the present disclosure, in which the composite is used as a raw material for dry molding, contains a cellulose fiber and a starch, in which at least a part of the starch is fused to the cellulose fiber, and a content of the starch is 30.0% by mass or more and 50.0% by mass or less with respect to a total amount of the composite.

A molded product according to this application example of the present disclosure includes a composite according to the present disclosure.

A method for producing a molded product according to this application example of the present disclosure includes a mixing step of mixing a fiber and a composite according to the present disclosure to obtain a mixture, a humidifying step of humidifying the mixture at least once, and a molding step of obtaining a molded product by pressurizing and heating the humidified mixture.

### BRIEF DESCRIPTION OF THE DRAWINGS

FIG. 1 is a schematic enlarged view illustrating a preferable embodiment of a composite of the present disclosure.
FIG. 2 is a schematic side view illustrating a preferable embodiment of a molded product producing device.

### DESCRIPTION OF EXEMPLARY EMBODIMENTS

Hereinafter, preferred embodiments of the present disclosure will be described in detail.

### 1. Composite

First, a composite of the present disclosure will be described.

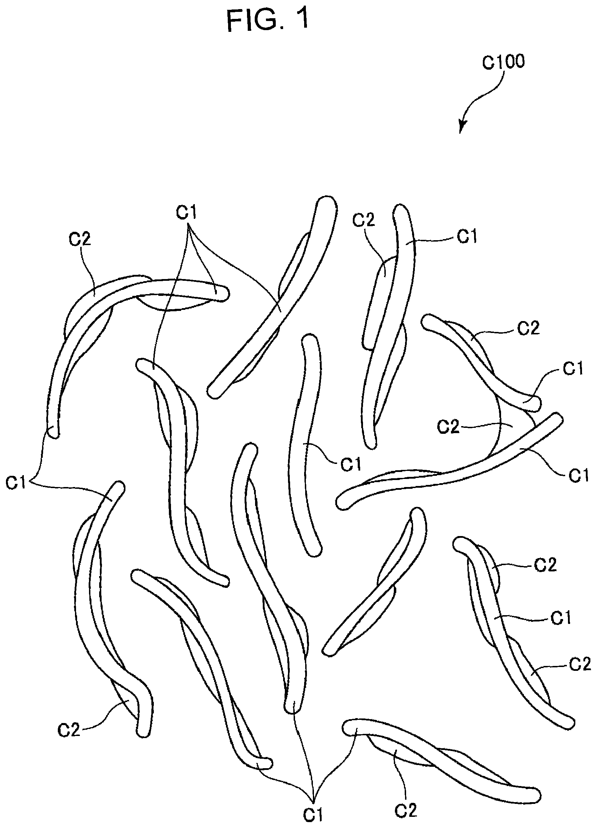

FIG. 1 is a schematic enlarged view illustrating a preferred embodiment of a composite of the present disclosure.

A composite C100 of the present disclosure is used as a raw material for dry molding and contains a cellulose fiber C1 and a starch C2, at least a part of the starch C2 is fused to the cellulose fiber C1, and a content of the starch C2 is 30.0% by mass or more and 50.0% by mass or less with respect to a total amount of the composite C100.

By using the composite C100, it is possible to suitably produce a molded product that is formed of a material containing cellulose fibers, has an excellent strength, and has a desired shape by using only a small amount of water while suppressing the use of petroleum-derived materials. That is, a dry molding method can be suitably applied. Therefore, it is also advantageous from the viewpoints of productivity and production cost of the molded product, energy saving, miniaturization of the production facility of the molded product, and the like. More specifically, by fusing at least a part of the starch C2 to the cellulose fiber C1, a moisture content of the starch C2 can be increased rapidly and sufficiently when the composite C100 comes into contact with liquid mist containing water or humidified gas by moisture that is generated from gas or liquid mist and directly absorbed by the starch C2, moisture that is absorbed by the cellulose fiber C1, and moisture that is supplied from the cellulose fiber C1 to the starch C2. In particular, even when the composite C100 comes into contact with a small amount of water without immersing the composite C100 in a liquid containing water, the moisture content in the starch C2 can be rapidly and sufficiently increased. As a result, the starch C2 having an increased moisture content, that is, the humidified starch C2 is suitably pregelatinized by heating. Therefore, the molded product, which is formed by using the composite C100 and of which the productivity is excellent, can be obtained. As described above, the starch C2 is suitably pregelatinized by heating with a small amount of water, and also a non-covalent bond such as a hydrogen bond acts between the starch C2 and the cellulose fiber C1 to have an excellent bonding force between the starch C2 and the cellulose fiber C1, so that the starch C2 exhibits an excellent coating property with respect to the cellulose fiber C1. Therefore, the strength of the molded product produced using the composite C100 can be excellent. By fusing at least a part of the starch C2 to the cellulose fiber C1, it is possible to more effectively prevent the cellulose fiber C1 from scattering and the like during the production of the molded product using the composite C100. Such the composite C100 and the molded product produced using the composite C100 are also excellent in biodegradability. In addition, it can contribute to miniaturization of a device for producing the molded product. Since the binding force of the starch can be exhibited with a small amount of moisture, it is also excellent in recyclability when the molded product is dry-produced again using the produced molded product. The recyclability referred to here refers to a degree of deterioration in the performance of the produced molded product when a dry molded product is produced again from a raw material obtained by defibrating the molded product containing the fibers and the starch. That is, when the reproduced molded product has excellent tensile strength and the like, recyclability is excellent, and when the reproduced molded product deteriorates in tensile strength and the like, recyclability also deteriorates.

On the other hand, when the above conditions are not satisfied, a satisfactory result cannot be obtained.

For example, even in the composite containing a fiber and a starch, when the composite does not contain a starch that is being fused to the fiber, it is difficult that the starch sufficiently absorbs water, that is, difficult to sufficiently increase the moisture content in the starch only by the case where the composite comes into contact with a small amount of water. Therefore, the pregelatinization of the starch cannot sufficiently proceed even though the subsequent heat treatment has been performed, and the strength of the molded product produced by using the composite cannot be made sufficiently excellent. In addition, in order to cause the sufficient pregelatinization of the starch to proceed, it is necessary to use a large amount of water or to lengthen a contact time with water, and therefore the productivity of the molded product significantly decreases. Furthermore, it is difficult to reduce a size of a device for producing a molded product.

Even in a composite containing a cellulose fiber and a starch fused to the cellulose fiber, when a content of the starch with respect to a total amount of the composite is lower than a lower limit, features of the starch cannot be sufficiently exhibited, and the strength of the molded product produced by using the composite cannot be made sufficiently excellent.

Even in a composite containing a cellulose fiber and a starch fused to the cellulose fiber, when a content of the starch with respect to a total amount of the composite is higher than an upper limit, the amount of water absorbed by the cellulose fiber and supplied to the starch is reduced, so that water absorbability of the starch when adding moisture to the composite, and before heating, a large amount of water is required to be processed in advance in order to pregelatinize the starch. As a result, the productivity of the molded product using the composite, and production cost significantly deteriorate, and a size of a production facility of the molded product is increased, which is not preferable from the viewpoint of energy saving. Since a large amount of moisture is required to be added to the composite, when the molded product is produced using such a composite, recyclability deteriorates when the molded product is dry-produced again using the molded product.

In the present disclosure, the dry molding refers to a method in which a material containing cellulose fibers is not immersed in a liquid containing water in a process of producing a molded product, a method in which a small amount of water is used, for example, a method for spraying a liquid containing water on a material containing cellulose fibers, and the like are also included in a dry molding method.

### 1-1 Cellulose fiber

The composite C100 contains the cellulose fiber C1.

The cellulose fiber C1 is usually a main component of the molded product produced using the composite C100, is a component that greatly contributes to the maintenance of the shape of the molded product and that has a great influence on the properties such as the strength of the molded product.

Cellulose constituting the cellulose fiber C1 is a compound having a large number of hydroxyl groups in a molecule and capable of suitably forming a hydrogen bond. Therefore, the molded product produced using the composite C100 is excellent in both a bonding force between the cellulose fibers C1 and a bonding force between the cellulose fiber C1 and the starch C2, and has an overall strength, for example, the tensile strength of the sheet-shaped molded product and the like can be more excellent.

Since the cellulose fiber C1 is a biomass-derived fiber, it is possible to suitably deal with environmental problems and saving of underground resources.

Cellulose is a natural material derived from plants and is an abundant resource, it is possible to more particularly suitably deal with environmental problems and saving of underground resources, and it is also preferable from the viewpoint of a stable supply of the composite C100 and the molded product produced using the composite C100, cost reduction, and the like. Cellulose fibers have a particularly high theoretical strength among various fibers, and are advantageous from the viewpoint of further improving the strength of the molded product.

Cellulose fibers are usually mainly constituted of cellulose, but may contain components other than cellulose. Examples of the component include hemicellulose, lignin, and the like.

Cellulose fibers that have been subjected to a treatment such as bleaching may be used.

The composite C100 contains the cellulose fiber C1 and the starch C2, and at least a part of the starch C2 is fused to the cellulose fiber C1, but the composite C100 may also contain a cellulose fiber C1 to which the starch C2 is not fused in addition to the cellulose fiber C1 to which the starch C2 is fused.

An average length of the cellulose fiber C1 is not particularly limited, but is preferably 0.1 mm or higher and 50 mm or lower, more preferably 0.2 mm or higher and 5.0 mm or lower, and even more preferably 0.3 mm or higher and 3.0 mm or lower.

Thereby, stability, strength, and the like of the shape of the molded product produced using the composite C100 can be made more excellent.

An average thickness of the cellulose fiber C1 is not particularly limited, but is preferably 0.005 mm or higher and 0.5 mm or lower, and more preferably 0.010 mm or higher and 0.050 mm or lower.

Thereby, stability, strength, and the like of the shape of the molded product produced using the composite C100 can be made more excellent. It is possible to more effectively prevent unintended unevenness on the surface of the molded product produced using the composite C100.

A content of the cellulose fiber C1 in the composite C100 is not particularly limited, but is preferably 50.0% by mass or more and 70.0% by mass or less, more preferably 52.0% by mass or more and 68.0% by mass or less, even more preferably 54.0% by mass or more and 66.0% by mass or less, and particularly preferably 56.0% by mass or more and 64.0% by mass or less.

Thereby, properties such as stability and strength of the shape of the molded product produced using the composite C100 can be made more excellent. In addition, moldability when producing the molded product can be made more excellent, which is also advantageous in improving the productivity of the molded product.

### 1-2. Starch

The composite C100 contains the starch C2 in a predetermined ratio. Furthermore, at least a part of the starch C2 is fused to the above described cellulose fiber C1.

The starch C2 is a component functioning as a binder that binds cellulose fibers C1 to each other in the molded product produced using the composite C100. In particular, since the starch C2 is a raw material derived from biomass, it is possible to suitably deal with environmental problems and saving of underground resources by using the starch C2. The starch C2 is contained in the composite C100 in a predetermined ratio as described above, so that the water absorbability is improved, and when moisture is added, the moisture can be rapidly absorbed. In addition, even when a small amount of moisture with respect to the amount of the starch is added, the starch can be suitably pregelatinized at a relatively low temperature, and an excellent binding property can be exhibited.

The starch C2 is a polymer material in which a plurality of α-glucose molecules are bonded by glycosidic bonds.

The starch C2 contains at least one of amylose or amylopectin.

As described above, a content of the starch C2 in the composite C100 is 30.0% by mass or more and 50.0% by mass or less, but is preferably 32.0% by mass or more and 48.0% by mass or less, more preferably 34.0% by mass or more and 46.0% by mass or less, and even more preferably 36.0% by mass or more and 44.0% by mass or less.

Thereby, the above described effect is more remarkably exhibited.

The content of the starch C2 in the composite C100 with respect to 100 parts by mass of the cellulose fiber C1 is preferably 20 parts by mass or more and 100 parts by mass or less, more preferably 25 parts by mass or more and 80 parts by mass or less, even more preferably 52 parts by mass or more and 85 parts by mass or less, particularly preferably 30 parts by mass or more and 60 parts by mass or less.

Thereby, the above described effect according to the present disclosure is more remarkably exhibited.

A weight-average molecular weight of the starch C2 is not particularly limited, but is preferably 40,000 or higher and 400,000 or lower, more preferably 60,000 or higher and 350,000 or lower, and even more preferably 80,000 or higher and 300,000 or lower.

Thereby, the water absorbability of the starch is improved, and even when the contact time with water was shortened, and the amount of water in contact with the composite C100, for example, humidity of an atmosphere to which the composite is exposed is relatively low, water can be absorbed more efficiently, and pregelatinization due to heating more suitably proceeds. As a result, the molded product, which is formed using the composite C100 and has an excellent productivity, can be obtained, and the strength of the molded product can be more excellent. Since the starch C2 having a predetermined molecular weight as described above are unlikely to undergo particularly unintended denaturation due to the addition of moisture, the molded product produced using the composite C100 is excellent in recyclability. Biodegradability of the composite C100 and the molded product produced using the composite C100 can be made more excellent.

The starch C2 having the molecular weight described above can be suitably obtained by performing a process, for example, such that sulfuric acid, hydrochloric acid, or sodium hypochlorite after suspending in water acts on a natural starch under a condition in which the starch does not gelatinize, or such that a natural starch is directly added or is added with a very small amount of volatile acid such as hydrochloric acid diluted with water, and the mixture is mixed well, aged, and dried at a low temperature, and then heated to 120°C to 180°C, or such that paste obtained by heating a natural starch with water is hydrolyzed with an acid or enzyme.

The weight-average molecular weight of the starch C2 can be determined by measurement with gel permeation chromatography. The weight-average molecular weight illustrated in Examples described later is also a value determined by measurement with gel permeation chromatography.

As the natural starch used as a raw material of the starch C2, for example, a starch derived from various plants can be used, and more specifically, a starch derived from, for example, grains such as corn, wheat, and rice, beans such as broad beans, mung beans, red beans, potatoes such as potatoes, sweet potatoes, tapioca, wild grasses such as erythronium, bracken, and kudzu, or palms such as sago palms can be used.

As described above, the composite C100 contains the cellulose fiber C1 and the starch C2, and at least a part of the starch C2 is fused to the cellulose fiber C1, but may contain a starch C2 that is not fused to the cellulose fiber C1 in addition to the starch C2 that is fused to the cellulose fiber C1.

### 1-3. Other components

The composite C100 may contain components other than the cellulose fiber C1 and the starch C2 described above.

Examples of the components include natural gum pastes such as etherified tamarind gum, etherified locust bean gum, etherified guar gum, and acacia arabia gum; fiber element-inducing pastes such as etherified carboxymethyl cellulose and hydroxyethyl cellulose; polysaccharides such as glycogen, hyaluronic acid, etherified starch, and esterified starch; seaweeds such as sodium alginate and agar; animal proteins such as collagen, gelatin, and hydrolyzed collagen; sizing agents; impurities derived from the cellulose fibers C1; impurities derived from the starch C2; and the like.

However, a content of components other than the cellulose fiber C1 and the starch C2 in the composite C100 is preferably 10% by mass or less, more preferably 5.0% by mass or less, and even more preferably 2.0% by mass or less.

A shape of the composite of the present disclosure is not particularly limited, and examples thereof include a sheet shape, a block shape, a cotton-like shape, a pellet shape, a small piece shape, a powder shape, and the like. The cotton-shaped composite of the present disclosure can be suitably obtained by, for example, defibrating the sheet-shaped or piece-shaped composite of the present disclosure.

### 2. Molded product

Next, the molded product of the present disclosure will be described.

The molded product of the present disclosure is configured to include the above described composite C100 of the present disclosure.

Thereby, it possible to provide a molded product that is formed of a material containing cellulose fibers, has excellent strength, and has a desired shape, while suppressing the use of petroleum-derived materials. Such the molded product is also excellent in biodegradability.

A shape of the molded product of the present disclosure is not particularly limited, and may be any shape such as a sheet shape, a block shape, a spherical shape, a three-dimensional shape, and the like, but the molded product of the present disclosure preferably has a sheet shape. The sheet shape described herein refers to a molded product molded to have a thickness of 30 µm or higher and 30 mm or lower and a density of 0.05 g/cm³ or higher and 1.5 g/cm³ or lower.

Thereby, for example, the molded product can be suitably used as a recording medium or the like. In addition, by using a producing method and a producing device as described later, the molded product is more efficiently produced.

When the molded product of the present disclosure is a sheet-shaped recording medium, a thickness thereof is preferably 30 µm or higher and 3 mm or lower.

Thereby, the molded product can be suitably used as a recording medium. In addition, by using a producing method and a producing device as described later, the molded product is more efficiently produced.

When the molded product of the present disclosure is a liquid absorber, a thickness thereof is preferably 0.3 mm or higher and 30 mm or lower.

Thereby, the molded product can be suitably used as a liquid absorber. In addition, by using a producing method and a producing device as described later, the molded product is more efficiently produced.

When the molded product of the present disclosure is a sheet-shaped recording medium, a density thereof is preferably 0.6 g/m³ or higher and 1.0 g/m³ or lower.

Thereby, the molded product can be suitably used as a recording medium.

When the molded product of the present disclosure is a liquid absorber, a density thereof is preferably 0.05 g/m³ or higher and 0.4 g/m³ or lower.

Thereby, the molded product can be suitably used as a liquid absorber.

At least a part of the molded product of the present disclosure may be formed of the above described composite C100 of the present disclosure, and may have a portion that is not formed of the composite C100 of the present disclosure.

The application of the molded product of the present disclosure is not particularly limited, and examples thereof include a recording medium, a liquid absorber, a buffer material, a sound absorbing material, and the like.

The molded product of the present disclosure, which has been subjected to machining such as cutting or various chemical treatments after the molding step, may be used.

### 3. Method for producing molded product

Next, a method for producing a molded product of the present disclosure will be described.

The method for producing a molded product of the present disclosure includes a mixing step of mixing fibers and the above described composite of the present disclosure to obtain a mixture, a humidifying step of humidifying the mixture at least once, and a molding step of obtaining a molded product by pressurizing and heating the humidified mixture. In the producing method of the present disclosure, water is used for humidification, but unlike the papermaking technique in the related art, the amount of water to be used is sufficiently small with respect to a mixture subjected to treatment. In other words, the producing method of the present disclosure is a method using dry molding.

Thereby, it is possible to provide the method for producing a molded product through which a molded product that is formed of a material containing cellulose fibers, has an excellent strength, and has a desired shape by using only a small amount of water while suppressing the use of petroleum-derived materials can be suitably produced. In addition, it is possible to more effectively prevent the cellulose fibers from scattering during the production of the molded product. Furthermore, the molded product having excellent biodegradability can be produced. In addition, it can contribute to miniaturization of a device for producing the molded product. 3-1. Mixing step

In the mixing step, the fibers and the composite of the present disclosure are mixed to obtain a mixture. In the following description, the cellulose fiber constituting the composite of the present disclosure may be referred to as a "first fiber", and a fiber mixed with the composite of the present disclosure in the mixing step may be referred to as a "second fiber".

The second fiber to be mixed with the composite of the present disclosure in this step may be, for example, a synthetic fiber formed of a synthetic resin such as polypropylene, polyester, or polyurethane, but is preferably a naturally-derived fiber, that is, a biomass-derived fiber, and more preferably a cellulose fiber.

Thereby, it is possible to more suitably deal with environmental problems and saving of underground resources.

In particular, when the second fiber is a cellulose fiber, the following effects can be obtained.

That is, cellulose is a natural material derived from plants and is an abundant resource. By using cellulose fibers as fibers, it is possible to more suitably deal with environmental problems and saving of underground resources, and the composite is also available, and it is also preferable from the viewpoint of stable supply of the molded product, cost reduction, and the like. Cellulose fibers have a particularly high theoretical strength among various fibers, and are advantageous from the viewpoint of further improving the strength of the molded product.

The second fiber to be mixed with the composite of the present disclosure may be in a form of a molded product such as paper such as waste paper or a coarsely crushed material thereof, for example, or may be in a cotton-like form, for example, a molded product such as paper such as waste paper or a defibrated material of a coarsely crushed material thereof.

A mixing ratio of the second fiber to the composite of the present disclosure in this step is preferably 200% or more and 1000% or less, more preferably 250% or more and 900% or less, and even more preferably 300% or more and 500% or less, in terms of mass ratio.

Thereby, the strength of the produced molded product can be made more excellent. For example, by using a fiber derived from waste paper as the second fiber, the recycling efficiency of the waste paper can be made more excellent.

In this step, at least the composite of the present disclosure and the second fiber may be mixed, but components other than the composite of the present disclosure and the second fiber may be mixed in addition to the composite and the second fiber.

Examples of such components include white materials such as calcium carbonate and titanium oxide, and a bactericide such as 5-chloro-2-methyl-4-isothiazolin-3-one.

However, a content of components other than the composite of the present disclosure and the second fiber in the mixture obtained in this step is preferably 10.0% by mass or less, more preferably 5.0% by mass or less, and even more preferably 1.0% by mass or less.

### 3-2. Humidifying step

In the humidifying step, the mixture containing the composite of the present disclosure and the second fiber is humidified.

Thereby, in the molding step described later, a bonding strength between the cellulose fibers as the first fiber and the starch, a bonding strength between the cellulose fibers as the first fiber through the starch, a bonding strength between the second fiber and the starch, a bonding strength between the second fibers through the starch, a bonding strength between the cellulose fiber as the first fiber and the second fiber through the starch, and the like can be made excellent, and a strength of the finally obtained molded product and the like can be made sufficiently excellent. In addition, molding in the molding step can be suitably performed under relatively mild conditions.

A method of humidifying the mixture is not particularly limited, but is preferably performed in a non-contact manner with respect to the mixture. Examples of the method include a method of placing the mixture in a high humidity atmosphere, a method of passing the mixture through a high humidity space, a method of spraying a mist of a liquid containing water on the mixture, a method of passing the mixture through a space where a mist of a liquid containing water floats, and the like, and one method can be performed singly or two or more methods selected from the above methods can be performed in combination. The liquid containing water may contain, for example, an antiseptic agent, an antifungal agent, a bactericide, an insecticide, or the like.

Humidification of the mixture may be performed through a plurality of steps in a process of producing the molded product, for example.

As described above, by humidifying the mixture at a plurality of stages in the process of producing the molded product, for example, it is not necessary to increase the humidification amount at each stage more than necessary. As a result, for example, a transportation speed of the mixture in the molded product producing device can be increased, and productivity of the molded product can be further improved.

Before humidifying the mixture, raw materials of the mixture, for example, the first fiber or the composite of the present disclosure may be humidified.

Thereby, for example, it is not required to increase the humidification amount for the mixture more than necessary. As a result, for example, a transportation speed of the mixture in the molded product producing device can be increased, and productivity of the molded product can be further improved.

The amount of moisture added to the mixture in the humidifying step is not particularly limited, but a moisture content of the mixture at the end of the humidifying step, that is, a ratio of the mass of moisture contained in the mixture to the mass of the mixture at the end of the humidifying step is preferably 10% by mass or more and 50% by mass or less, more preferably 13% by mass or more and 45% by mass or less, and even more preferably 15% by mass or more and 40% by mass or less.

Thereby, it is possible to make the starch absorb water more suitably, and the subsequent molding step can be more suitably performed. As a result, the strength, reliability, and the like of the finally obtained molded product can be more excellent. In addition, since the time required for water absorption of a starch can be relatively shortened, the productivity of the molded product can be more excellent.

The content of moisture can be determined by measurement using a heat-drying moisture meter manufactured by A&D Company, Limited.

### 3-3. Molding step

In the molding step, the humidified mixture is heated and pressurized to be molded as a predetermined shape. Thereby, the molded product of the present disclosure, in which the fibers are bonded to each other through the fused starch, that is, a molded product is obtained by bonding the first fibers to each other, bonding the second fibers to each other, and bonding the first fiber to the second fiber through the fused starch. The humidifying step may be performed while performing the molding step.

As described above, the composite contains the cellulose fiber as the first fiber and the starch, and at least a part of the starch is fused to the cellulose fiber as the first fiber. A content of the starch may be 30.0% by mass or more and 50.0% by mass or less, and at the time of being subjected to the molding step, the composite preferably contains defibrated materials obtained by defibrating a composite sheet containing cellulose fibers as the first fibers and the starch fused to the cellulose fibers.

Such a defibrated material usually has a cotton-like shape, and can be more suitably adapted to the production of molded products having various shapes and thicknesses. By using the sheet-shaped composite as a raw material for the defibrated material, the mixture is easily prepared. The mixture can be easily prepared from the composite sheet that is a sheet-shaped composite as only the required amount when needed, so that a space required for storing the raw material can be reduced, thereby also contributing to further miniaturization of the molded product producing device. When the sheet-shaped composite is waste paper used as a recording medium or the like, and a sheet-shaped molded product is produced therefrom, the number of times of reusing the composite and the number of times of recycling can be more suitably increased, which is preferable.

A heating temperature in the molding step is not particularly limited, but is preferably 60°C or higher and 180°C or lower, more preferably 70°C or higher and 170°C or lower, and even more preferably 80°C or higher and 160°C or lower.

Thereby, pregelatinization of the starch having absorbed moisture can suitably proceed, the constituting material of the molded product is effectively prevented from being unintentionally deteriorated, and it is also preferable from the viewpoint of energy saving. Heat resistance of the obtained molded product and the mechanical strength at a relatively low temperature such as room temperature can be more excellent. The above temperature is sufficiently lower than a case where polyester, which is a synthetic resin, is used as a binder.

The pressurization in the molding step is preferably performed at 0.1 MPa or higher and 100 MPa or lower, and more preferably 0.3 MPa or higher and 20 MPa or lower.

This step can be performed using, for example, a hot press, a hot roller, or the like.

A content of the starch with respect to a total amount of the molded product in the molded product obtained in this way is preferably 3.0% by mass or more and 20.0% by mass or less, more preferably 4.0% by mass or more and 18.0% by mass or less, and even more preferably 5.0% by mass or more and 16.0% by mass or less.

Thereby, the strength of the molded product can be made more excellent. For example, when using a fiber derived from waste paper as the second fiber, the recycling efficiency of the waste paper can be made more excellent.

### 3-4. Molded product producing device

Next, the molded product producing device that can be suitably applied to the method for producing a molded product of the present disclosure will be described.

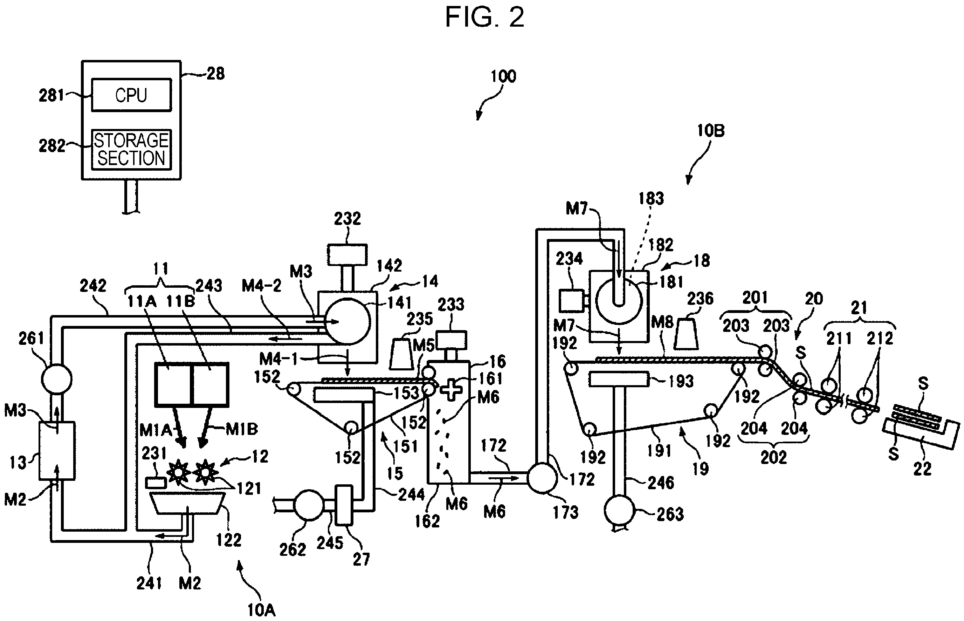

FIG. 2 is a schematic side view illustrating a preferred embodiment of the molded product producing device.

In the following, the upper side of FIG. 2 may be referred to as an "upper" or an "upper direction", and the lower side may be referred to as a "lower" or a "lower direction".

FIG. 2 is a schematic configuration diagram, and a positional relationship of each section of a molded product producing device 100 is different from the positional relationship illustrated in the figure. In each section in the figure, directions in which a raw material M1A, a raw material M1B, a coarsely crushed piece M2, a defibrated material M3, a first sorted material M4-1, a second sorted material M4-2, a first web M5, a fine fragment material M6, a second web M8, and a sheet S are transported, that is, directions indicated by arrows are also referred to as transportation directions. The tip side of the arrow is also referred to as the downstream in the transportation direction, and the base end of the arrow is also referred to as the upstream in the transportation direction.

The molded product producing device 100 illustrated in FIG. 2 is a device for obtaining a molded product by coarsely crushing, defibrating, and accumulating the raw material M1A and the raw material M1B, and molding the accumulated material using a molding section 20.

The molded product produced by the molded product producing device 100 may have a sheet shape such as recycled paper or a block shape. A density of the molded product is not particularly limited, and a molded product having a relatively high fiber density such as a sheet may be used, a molded product having a relatively low fiber density such as a sponge body may be used, or a molded product in which these properties are mixed may be used.

As the raw material M1A, the composite of the present disclosure, that is, the composite containing the cellulose fiber as the first fiber and the starch, in which at least a part of the starch is fused to the cellulose fiber, and a content of the starch is 30.0% by mass or more and 50.0% by mass or less with respect to a total amount of the composite, is used. Particularly, in the present embodiment, the raw material M1A has a sheet shape. As the raw material M1B, for example, waste paper that has been used or unnecessary waste paper can be used. The raw material M1A and the raw material M1B may be, for example, recycled paper or non-recycled paper.

In the following description, a case where the molded product produced by using the raw material M1A that is formed in a sheet shape and constituted of the composite of the present disclosure, and the raw material M1B that is waste paper having been used or unnecessary is a sheet S that is recycled paper will be mainly described.

The molded product producing device 100 illustrated in FIG. 2 is provided with a raw material supplying section 11, a coarsely crushing section 12, a defibrating section 13, a sorting section 14, a first web forming section 15, a fragmenting section 16, a dispersing section 18, a second web forming section 19, a molding section 20, a cutting section 21, a stock section 22, a collecting section 27, and a control section 28 that controls an operation thereof. Each of the coarsely crushing section 12, defibrating section 13, sorting section 14, first web forming section 15, fragmenting section 16, dispersing section 18, second web forming section 19, molding section 20, cutting section 21, and stock section 22 is a processing section that processes a sheet.

A sheet processing device 10A includes the raw material supplying section 11 and the coarsely crushing section 12 or the defibrating section 13. A fiber body accumulation device 10B includes the sheet processing device 10A and the second web forming section 19.

The molded product producing device 100 is provided with a humidifying section 231, a humidifying section 232, a humidifying section 233, a humidifying section 234, a humidifying section 235, and a humidifying section 236. The molded product producing device 100 is provided with a blower 261, a blower 262, and a blower 263.

The humidifying section 231 to the humidifying section 236 and the blower 261 to the blower 263 are electrically coupled to the control section 28, and an operation thereof is controlled by the control section 28 provided with a CPU 281 and a storage section 282. That is, in the present embodiment, an operation of each section of the molded product producing device 100 is controlled by one control section 28. However, the present disclosure is not limited thereto, and for example, the molded product producing device 100 may include a control section that controls an operation of each section of the raw material supplying section 11 and a control section controlling operations of parts other than the raw material supplying section 11.

In the molded product producing device 100, a raw material supplying step, a coarsely crushing step, a defibrating step, a sorting step, a first web forming step, a fragmenting step, a releasing step, an accumulating step, a sheet forming step, a cutting step are executed in this order. The coarsely crushing step corresponds to the mixing step in the method for producing a molded product of the present disclosure, and the sheet forming step corresponds to the molding step in the method for producing a molded product of the present disclosure. In addition, a step of performing humidification by each humidifying section described in detail later corresponds to the humidifying step. Furthermore, the coarsely crushed piece M2 that is the mixture obtained in the coarsely crushing step is obtained, and the form of the coarsely crushed piece M2 that is the mixture is sequentially changed in each section of the molded product producing device 100 to the defibrated material M3, the first sorted material M4-1, the second sorted material M4-2, the first web M5, the fine fragment material M6, and the second web M8. All of these correspond to the mixture in the method for producing a molded product of the present disclosure.

A configuration of each section will be described below.

The raw material supplying section 11 is a part that performs the raw material supplying step of supplying the raw material M1B that is a main raw material and the raw material M1A that is an auxiliary raw material to the coarsely crushing section 12.

In the present embodiment, the case where the raw material M1A and the raw material M1B are formed of a sheet shape is described, but the present disclosure is not limited thereto, and for example, the raw material M1A and the raw material M1B may be formed of a block shape, a pellet shape, a cotton-like shape, and small pieces.

In the illustrated configuration, the raw material supplying section 11 includes a first reserving section 11A that reserves the raw material M1A and a second reserving section 11B that reserves the raw material M1B, but may be configured to include a reserving section that collectively reserves the raw material M1A and the raw material M1B.

The coarsely crushing section 12 is a part that performs the coarsely crushing step of coarsely crushing the raw material M1A and the raw material M1B supplied from the raw material supplying section 11 in air such as atmosphere. The coarsely crushing section 12 has a pair of coarsely crushing blades 121 and a chute 122.

The pair of coarsely crushing blades 121 can coarsely crush the raw material M1A and the raw material M1B between the coarsely crushing blades by rotating in opposite directions, that is, can cut the raw material M1A and the raw material M1B into coarsely crushed pieces M2. A shape and size of the coarsely crushed piece M2 are preferably suitable for a defibrating process in the defibrating section 13, for example, a small piece having one side length of 100 mm or lower is preferable, and a small piece having one side length of 10 mm or higher and 70 mm or lower is more preferable.

The chute 122 is disposed below the pair of coarsely crushing blades 121, and has a funnel shape, for example. Thereby, the chute 122 can receive the coarsely crushed pieces M2 that are coarsely crushed by the coarsely crushing blades 121 and then fallen.

Above the chute 122, the humidifying section 231 is disposed adjacent to the pair of coarsely crushing blades 121. The humidifying section 231 humidifies the coarsely crushed pieces M2 in the chute 122. The humidifying section 231 includes a filter containing moisture, and is a vaporization type humidifier that supplies humidified air with increased humidity to the coarsely crushed pieces M2 by passing the air through the filter. By supplying the humidified air to the coarsely crushed piece M2, the humidifying step described in the above 3-2 can be performed, and the above described effect can be obtained. In addition, it is possible to prevent the coarsely crushed pieces M2 from adhering to the chute 122 or the like due to static electricity.

The chute 122 is coupled to the defibrating section 13 through a tube 241. The coarsely crushed pieces M2 collected on the chute 122 pass through the tube 241 and are transported to the defibrating section 13.

The defibrating section 13 is a part that performs the defibrating step of defibrating the coarsely crushed pieces M2 in air, that is, by using a dry method. By a defibrating process in the defibrating section 13, the defibrated material M3 can be produced from the coarsely crushed piece M2. Here, "defibrating" means that the coarsely crushed piece M2 formed by binding a plurality of fibers with each other is unraveled into individual fibers. This unraveled fibers form the defibrated materials M3. A shape of the defibrated material M3 is linear or strip-shaped. Furthermore, the defibrated materials M3 may exist in a state of being intertwined and agglomerated, that is, in a state of forming a so-called "lump".

For example, in the present embodiment, the defibrating section 13 includes an impeller mill having a rotary blade that rotates at high speed and a liner located on the outer periphery of the rotary blade. The coarsely crushed piece M2 that has flowed into the defibrating section 13 is sandwiched between the rotary blade and the liner, and is defibrated.

The defibrating section 13 can generate an air flow, that is, airstream from the coarsely crushing section 12 toward the sorting section 14 by the rotation of the rotary blade. Thereby, the coarsely crushed piece M2 can be sucked from the tube 241 to the defibrating section 13. After the defibrating process, the defibrated materials M3 can be sent out to the sorting section 14 via a tube 242.

The blower 261 is installed in the middle of the tube 242. The blower 261 is an airflow generator generating airstream toward the sorting section 14. Thereby, it is promoted that the defibrated materials M3 are sent out to the sorting section 14.

The sorting section 14 is a part that performs a sorting step of sorting the defibrated materials M3 according to sizes of the fiber length. In the sorting section 14, the defibrated material M3 is sorted into the first sorted material M4-1 and the second sorted material M4-2 which is larger than the first sorted material M4-1. The first sorted material M4-1 has a size suitable for the sheet S to be subsequently produced. An average length thereof is preferably 1 µm or higher and 30 µm or lower. On the other hand, the second sorted material M4-2 includes, for example, insufficiently defibrated materials, agglomerates generated such that the defibrated fibers are excessively agglomerated to each other.

The sorting section 14 includes a drum section 141 and a housing section 142 accommodating the drum section 141.

The drum section 141 is a cylindrical net body and is a sieve rotating about a central axis. The defibrated materials M3 flows into the drum section 141. By rotating the drum section 141, the defibrated materials M3 having a size smaller than a mesh opening are sorted as the first sorted materials M4-1, and the defibrated materials M3 having a size larger than the mesh opening is sorted as the second sorted materials M4-2. The first sorted materials M4-1 fall from the drum section 141.

On the other hand, the second sorted materials M4-2 are sent out to a tube 243 coupled to the drum section 141. The upstream of the tube 243 is coupled to a side opposite to the drum section 141, that is, coupled to the tube 241. The second sorted materials M4-2 that have passed through the tube 243 get together with the coarsely crushed pieces M2 in the tube 241 and flow into the defibrating section 13 together with the coarsely crushed pieces M2. Thereby, the second sorted materials M4-2 are returned to the defibrating section 13 and subjected to the defibrating process together with the coarsely crushed pieces M2.

The first sorted materials M4-1 to be fallen from the drum section 141 fall while being dispersed in the air, and directs toward the first web forming section 15 located below the drum section 141. The first web forming section 15 is a part that performs the first web forming step of forming the first web M5 by using the first sorted materials M4-1. The first web forming section 15 includes a mesh belt 151, three tension rollers 152, and a suction section 153.

The mesh belt 151 is an endless belt on which the first sorted materials M4-1 are accumulated. The mesh belt 151 winds around three tension rollers 152. The first sorted materials M4-1 on the mesh belt 151 is transported to the downstream by rotational drive of the tension rollers 152.

Sizes of the first sorted materials M4-1 are larger than the mesh openings of the mesh belt 151. Thereby, the first sorted materials M4-1 are restricted from passing through the mesh belt 151, and thus can be accumulated on the mesh belt 151. The first sorted materials M4-1 are transported to the downstream together with the mesh belt 151 while being accumulated on the mesh belt 151, and are formed as the first web M5 having a layered shape.

In addition, dust, dirt, and the like may be mixed between the first sorted materials M4-1. Dust and dirt may be generated in pursuance of, for example, a coarsely crushing process or a defibrating process. Such dust and dirt are collected by a collecting section 27, which will be described later.

The suction section 153 is a suction mechanism sucking air below the mesh belt 151. Thereby, the dust and dirt that have passed through the mesh belt 151 can be sucked together with the air.

The suction section 153 is coupled to the collecting section 27 through a tube 244. The dust and dirt sucked by the suction section 153 are collected by the collecting section 27.

A tube 245 is further coupled to the collecting section 27. A blower 262 is installed in the middle of the tube 245. By operating the blower 262, a suction force can be generated at the suction section 153. Thereby, it is promoted that the first web M5 on the mesh belt 151 is formed. Dust, dirt, and the like are removed from the first web M5. Dust and dirt pass through the tube 244 and reach the collecting section 27 by an operation of the blower 262.

The housing section 142 is coupled to the humidifying section 232. The humidifying section 232 is a vaporization type humidifier. Thereby, humidified air is supplied into the housing section 142. By supplying the humidified air, the humidifying step described in the above 3-2 can be performed, and the above described effect can be obtained. In addition, the first sorted materials M4-1 can be humidified, and thus it is possible to prevent the first sorted materials M4-1 from adhering to an inner wall of the housing section 142 due to electrostatic force.

The humidifying section 235 is disposed on the downstream of the sorting section 14. The humidifying section 235 is an ultrasonic humidifier that sprays water. Thereby, moisture can be supplied to the first web M5, and thus the amount of moisture in the first web M5 is adjusted. By adjusting the amount of moisture, the humidifying step described in the above 3-2 can be performed, and the above described effect can be obtained. In addition, it is possible to suppress the adsorption of the first web M5 to the mesh belt 151 due to electrostatic force. Thereby, the first web M5 is easily peeled off from the mesh belt 151 at a position where the mesh belt 151 is folded back by the tension roller 152.

The fragmenting section 16 is disposed on the downstream of the humidifying section 235. The fragmenting section 16 is a part that performs the fragmenting step of fragmenting the first web M5 that has been peeled from the mesh belt 151. The fragmenting section 16 includes a propeller 161 rotatably supported and a housing section 162 accommodating the propeller 161. Then, the first web M5 can be fragmented by the rotating propeller 161. The first web M5 is fragmented to be the fine fragment material M6. The fine fragment material M6 falls in the housing section 162.

The housing section 162 is coupled to the humidifying section 233. The humidifying section 233 is a vaporization type humidifier. Thereby, humidified air is supplied into the housing section 162. By supplying the humidified air, the humidifying step described in the above 3-2 can be performed, and the above described effect can be obtained. In addition, it is possible to prevent the fine fragment material M6 from adhering to an inner wall of the propeller 161 and an inner wall of the housing section 162 due to electrostatic force.

A tube 172 and a blower 173 are disposed on the downstream of the fragmenting section 16.

The housing section 162 of the fragmenting section 16 is coupled to the housing 182 of the dispersing section 18 via the tube 172, and the tube 172 is a flow path through which the fine fragment material M6 obtained by sufficiently stirring and mixing the cellulose fibers that are the first fibers, the starch, and the second fibers in the fine fragment material M6 passes.

The blower 173 is installed in the middle of the tube 172. It is promoted that the cellulose fibers that are the first fibers, the starch, and the second fibers in the fine fragment material M6 are mixed with each other by an operation of a rotating section such as a blade included in the blower 173. The blower 173 can generate airstream toward the dispersing section 18. By this airstream, the cellulose fibers that are the first fibers, the starch, and the second fibers in the fine fragment material M6 can be agitated in the tube 172. Thereby, the cellulose fibers that are the first fibers, the starch, and the second fibers in the fine fragment material M6 are uniformly dispersed and transported to the dispersing section 18. Furthermore, the cellulose fibers that are the first fibers, and the second fibers in the fine fragment material M6 are unraveled in a process of passing through the tube 172 to have a finer fiber shape.

As illustrated in FIG. 2, the blower 173 is electrically coupled to the control section 28, and an operation thereof is controlled. In addition, by adjusting the amount of air blown by the blower 173, the amount of air sent into the drum 181 can be adjusted.

Although it is not illustrated, an end of the tube 172 on the drum 181 side is bifurcated, and the bifurcated ends are coupled to an introduction port (not shown) formed on an end surface of the drum 181, respectively.

The dispersing section 18 illustrated in FIG. 2 is a part that performs the releasing step of unraveling and releasing the fibers that have been entangled with each other in the fine fragment material M6. The dispersing section 18 includes the drum 181 introducing and releasing the fine fragment material M6 that is a defibrated material, the housing 182 that accommodates the drum 181, and a drive source 183 that rotationally drives the drum 181.

The drum 181 is a cylindrical net body and is a sieve rotating about a central axis. By rotating the drum 181, fibers or the like in the fine fragment material M6, which are smaller than mesh openings, can pass through the drum 181. At that time, the fine fragment material M6 is unraveled and released together with air. That is, the drum 181 functions as a releasing section that releases a material containing fibers.

Although it is not illustrated, the drive source 183 includes a motor, a speed reducer, and a belt. The motor is electrically coupled to the control section 28 via a motor driver. The rotational force output from the motor is reduced by the speed reducer. The belt is, for example, an endless belt, and winds around an output axis of the speed reducer and an outer circumference of the drum. Thereby, the rotational force of the output axis of the speed reducer is transmitted to the drum 181 through the belt.

The housing 182 is coupled to the humidifying section 234. The humidifying section 234 is a vaporization type humidifier. Thereby, humidified air is supplied into the housing 182. The inside of the housing 182 can be humidified by this humidified air, and the humidifying step described in the above 3-2 can be performed, so that the above described effect can be obtained. In addition, it is possible to prevent the fine fragment material M6 from adhering to an inner wall of the housing 182 due to electrostatic force.

The fine fragment material M6 released from the drum 181 falls while being dispersed in the air, and directs toward the second web forming section 19 located below the drum 181. The second web forming section 19 is a part that performs the accumulating step of accumulating the fine fragment material M6 to form the second web M8 that is an accumulated material. The second web forming section 19 includes a mesh belt 191, tension rollers 192, and a suction section 193.

The mesh belt 191 is a mesh member, and in the illustrated configuration, the mesh belt 191 is an endless belt. The fine fragment material M6 dispersed and released by the dispersing section 18 is accumulated on the mesh belt 191. The mesh belt 191 winds around four tension rollers 192. The fine fragment material M6 on the mesh belt 191 is transported to the downstream by rotational drive of the tension rollers 192.

In the illustrated configuration, the mesh belt 191 is used as an example of the mesh member, but the present disclosure is not limited thereto, and for example, a flat plate shape may be used.

A large proportion of the fine fragment material M6 on the mesh belt 191 has a size larger than mesh openings of the mesh belt 191. Thereby, the fine fragment material M6 is restricted from passing through the mesh belt 191 and thus accumulated on the mesh belt 191. The fine fragment material M6 is transported to the downstream together with the mesh belt 191 while being accumulated on the mesh belt 191, and is formed as the second web M8 having a layered shape.

The suction section 193 is a suction mechanism sucking air below the mesh belt 191. Thereby, the fine fragment material M6 can be sucked onto the mesh belt 191, and thus it is promoted that the fine fragment material M6 is accumulated on the mesh belt 191.

A tube 246 is coupled to the suction section 193. A blower 263 is installed in the middle of the tube 246. By operating the blower 263, a suction force can be generated at the suction section 193.

The humidifying section 236 is disposed on the downstream of the dispersing section 18. The humidifying section 236 is the same ultrasonic humidifier as the humidifying section 235. Thereby, moisture can be supplied to the second web M8, and thus the amount of moisture in the second web M8 is adjusted. By adjusting the amount of moisture, the humidifying step described in the above 3-2 can be performed, and the above described effect can be obtained. In addition, it is possible to suppress the adsorption of the second web M8 to the mesh belt 191 due to electrostatic force. Thereby, the second web M8 is easily peeled off from the mesh belt 191 at a position where the mesh belt 191 is folded back by the tension roller 192.

The total amount of moisture added from the humidifying section 231 to the humidifying section 236 is not particularly limited, but a moisture content of the mixture at the end of the humidifying step, that is, a ratio of the mass of moisture contained in the second web M8 to the mass of the second web M8 in a state of being humidified by the humidifying section 236 is preferably 15% by mass or more and 50% by mass or less, and more preferably 15% by mass or more and 30% by mass or less.

The molding section 20 is disposed on the downstream of the second web forming section 19. The molding section 20 is a part that performs the sheet forming step of forming the sheet S from the second web M8. The molding section 20 includes a pressurizing section 201 and a heating section 202.

The pressurizing section 201 has a pair of calendar rollers 203, and can pressurize the second web M8 between the calendar rollers 203 without heating. Thereby, a density of the second web M8 is increased. This second web M8 is transported toward the heating section 202. One of the pair of calendar rollers 203 is a driving roller driven by an operation of a motor (not shown), and the other is a driven roller.

The heating section 202 has a pair of heating rollers 204, and can pressurize the second web M8 between the heating rollers 204 while heating the second web M8. By this heating and pressurization, in the second web M8, the starch having absorbed moisture through humidification is pregelatinized and exhibits viscosity, and the fibers are bound to each other through this starch that has exhibited viscosity. Thereby, the sheet S is formed. The sheet S is transported toward the cutting section 21. One of the pair of heating rollers 204 is a driving roller driven by an operation of a motor (not shown), and the other is a driven roller.

The cutting section 21 is disposed on the downstream of the molding section 20. The cutting section 21 is a part that performs the cutting step of cutting the sheet S. The cutting section 21 includes a first cutter 211 and a second cutter 212.

The first cutter 211 cuts the sheet S in a direction intersecting the transportation direction of the sheet S, particularly in a direction orthogonal to the transportation direction.

The second cutter 212 cuts the sheet S in a direction parallel to the transportation direction of the sheet S on the downstream of the first cutter 211. With this cutting, unnecessary portions at both ends in the width direction of the sheet S are removed to adjust the width of the sheet S, and the cut-removed portions are so-called "edges".

In this way, the sheet S having a desired shape and size can be obtained by cutting the sheet S with the first cutter 211 and the second cutter 212. Then, the sheet S is further transported to the downstream and stock in the stock section 22.

The molding section 20 is not limited to the above described configuration to mold the sheet S, and for example, configurations to form the molded product into a block shape, a spherical shape, or the like may be employed.

Each section included in the molded product producing device 100 is electrically coupled to the control section 28 described later. An operation of each of these sections is controlled by the control section 28.

Although the preferred embodiment of the present disclosure is described above, the present disclosure is not limited thereto.

For example, each section constituting the molded product producing device used for producing the molded product can be replaced with any constitution capable of exhibiting the same function. Furthermore, any components may be added.

In the above description, the case where the humidifying step is performed by a plurality of number of times in the molded product producing device is described as a target, but the humidifying step may be performed only once in the process of producing the molded product.

The method for producing a molded product of the present disclosure may include the above described mixing step, humidifying step, and molding step. Furthermore, a molded product producing device is not limited to the above described molded product producing device, and any devices may be used.

### Examples

### 4. Preparation of starch

Next, specific examples of the present disclosure will be described.

### Preparation Example 1

A starch having a weight-average molecular weight of 1,300,000 (G-800 manufactured by NIPPON STARCH CHEMICAL CO., LTD.) was prepared, and after suspending this starch in water, sulfuric acid was allowed to act under a condition in which the starch does not gelatinize and was well mixed. Subsequently, the mixture was stirred for 12 hours, dried at 50°C for 24 hours, and then dried until a moisture content was 10% by mass or less, and thereafter heated at 120°C to 180°C to obtain a starch with a weight-average molecular weight of 400,000. Preparation Examples 2 to 6

A starch having the adjusted weight-average molecular weights was obtained in the same manner as in Preparation Example 1, except that by changing processing conditions (sulfuric acid concentration, and stirring time) for the starch having a weight-average molecular weight of 1,300,000 (G-800 manufactured by NIPPON STARCH CHEMICAL CO., LTD.), weight-average molecular weights of the finally obtained starches were adjusted to be represented by values illustrated in Table 1.

Conditions for the starches having the adjusted weight-average molecular weights obtained in respective Preparation Examples are summarized and illustrated in Table 1.

**Table 1**

| | Weight-average molecular weight [×10⁴] |
|---|---|
| Preparation Example 1 | 40 |
| Preparation Example 2 | 30 |
| Preparation Example 3 | 15 |
| Preparation Example 4 | 8 |
| Preparation Example 5 | 60 |
| Preparation Example 6 | 4 |

### 5. Production of composite

### Example A1

First, a cellulose defibrated material was produced by using the molded product producing device 100 as illustrated in FIG. 2 as follows.

That is, first, as the raw material M1B, a plurality of G80s (manufactured by Mitsubishi Paper Mills Limited) made of cellulose fibers were prepared, and the plurality of G80s were accommodated in the second reserving section 11B of the raw material supplying section 11. In this case, nothing was accommodated in the first reserving section 11A of the raw material supplying section 11.

Then, as described above, the molded product producing device 100 was operated.

In this case, the starch prepared in Preparation Example 1 is supplied to the tube 172 at a predetermined ratio from an additive supplying unit (not shown) provided in the tube 172, and a mixture was obtained by mixing the first web M5 made of the cellulose fibers formed by the first web forming section 15 with the starch. By sequentially transporting this mixture to the dispersing section 18, the second web forming section 19, the molding section 20, the cutting section 21, and the stock section 22, a sheet-shaped composite containing a cellulose fiber and a starch of the preparation Example 1, in which a part of the starch is fused to the cellulose fiber, was obtained.

### Examples A2 to A8

The composites were produced in the same manner as in Example A1 except that the starch was used as illustrated in Table 2 and a mixing ratio of the defibrated cellulose fiber to the starch was set as illustrated in Table 2.

### Comparative Examples A1 to A3

The composites were produced in the same manner as in Example A1 except that a mixing ratio of the defibrated cellulose fiber to the starch was set as illustrated in Table 2.

Conditions of the sheet-shaped composites obtained in respective Examples and Comparative Examples are summarized in Table 2. The cellulose fibers contained in the composite obtained in each case of Examples and Comparative Examples had an average length of 0.1 mm or higher and 10 mm or lower, and an average thickness of 0.01 mm or higher and 0.04 mm or lower.

**Table 2**

| | Cellulose fiber | Starch | | |
|---|---|---|---|---|
| | Content [% by mass] | Kinds | Weight-average molecular weight [×10⁴] | Content [% by mass] |
| Example A1 | 60.0 | Preparation Example 1 | 40 | 40.0 |
| Example A2 | 60.0 | Preparation Example 2 | 30 | 40.0 |
| Example A3 | 60.0 | Preparation Example 3 | 15 | 40.0 |
| Example A4 | 60.0 | Preparation Example 4 | 4 | 40.0 |
| Example A5 | 60.0 | Preparation Example 5 | 50 | 40.0 |
| Example A6 | 60.0 | Preparation Example 6 | 3 | 40.0 |
| Example A7 | 70.0 | Preparation Example 3 | 15 | 30.0 |
| Example A8 | 50.0 | Preparation Example 3 | 15 | 65.0 |
| Comparative Example A1 | 90.0 | Preparation Example 3 | 15 | 10.0 |
| Comparative Example A2 | 30.0 | Preparation Example 3 | 15 | 70.0 |
| Comparative Example A3 | 10.0 | Preparation Example 3 | 15 | 90.0 |

### 6. Production of molded product

### Example B1

The sheet S as a molded product was produced by using the molded product producing device 100 as illustrated in FIG. 2 as follows.

First, as the raw material M1A, a plurality of sheet-shaped composites obtained in Example A1 described above were prepared, and the plurality of sheet-shaped composites were accommodated in the first reserving section 11A of the raw material supplying section 11. In addition, as the raw material M1B, a plurality of pieces of G80 paper (manufactured by Mitsubishi Paper Mills Limited) made of cellulose fibers were prepared, and the plurality of pieces of G80 paper were accommodated in the second reserving section 11B of the raw material supplying section 11.

Thereafter, as described above, the sheet S as the molded product was obtained by operating the molded product producing device 100.

The humidifying section 231, humidifying section 232, humidifying section 233, humidifying section 234, humidifying section 235, and humidifying section 236 each humidify the second web M8, and a ratio of the mass of moisture contained in the second web M8 to the mass of the second web M8 in a state of being humidified at the humidifying section 236 was 20% by mass.

A use ratio of the composite as the raw material M1A and G80 paper (manufactured by Mitsubishi Paper Mills Limited) as the raw material M1B, that is, a mixing ratio of the composite of the present disclosure and the second fiber was 1:5.5 in terms of mass ratio.

The heating temperature at the molding section 20 was 800°C, the heating time was 1 second, and the pressurization at the molding section 20 was performed at 20 MPa. Examples B2 to B8

Molded products were produced in the same manner as in Example B1, except that the sheet-shaped composites produced in Examples A2 to A8 were used as the raw material M1A respectively, instead of the sheet-shaped composite produced in Example A1.

### Comparative Examples B1 to B3

Molded products were produced in the same manner as in Example B1, except that the sheet-shaped composites produced in Comparative Examples A1 to A3 were used as the raw material M1A respectively, instead of the sheet-shaped composite produced in Example A1.

The configurations of the molded products of Examples B1 to B8 and Comparative Examples B1 to B3 are summarized and illustrated in Table 3. The cellulose fibers contained in the molded products obtained in each case of Examples B1 to B8 and Comparative Examples B1 to B3 had an average length of 0.1 mm or higher and 2 mm or lower, and an average thickness of 0.01 mm or higher and 0.05 mm or lower.

**Table 3**

| | Cellulose fiber (First fiber + second fiber) | Starch | | | Thickness [mm] | Density [g/m³] |
|---|---|---|---|---|---|---|
| | Content [% by mass] | Kinds | Weight-average molecular weight [×10⁴] | Content [% by mass] | | |
| Example B1 | 94 | Preparation Example 1 | 40 | 6 | 0.1 | 0.8 |
| Example B2 | 94 | Preparation Example 2 | 30 | 6 | 0.1 | 0.8 |
| Example B3 | 94 | Preparation Example 3 | 15 | 6 | 0.1 | 0.8 |
| Example B4 | 94 | Preparation Example 4 | 4 | 6 | 0.1 | 0.8 |
| Example B5 | 94 | Preparation Example 5 | 50 | 6 | 0.1 | 0.8 |
| Example B6 | 94 | Preparation Example 6 | 3 | 6 | 0.1 | 0.8 |
| Example B7 | 95.4 | Preparation Example 3 | 15 | 4.6 | 0.1 | 0.8 |
| Example B8 | 92.3 | Preparation Example 3 | 15 | 7.7 | 0.1 | 0.8 |
| Comparative Example B1 | 98.5 | Preparation Example 3 | 15 | 6 | 0.1 | 0.8 |
| Comparative Example B2 | 89.0 | Preparation Example 3 | 15 | 6 | 0.1 | 0.8 |
| Comparative Example B3 | 86.2 | Preparation Example 3 | 15 | 6 | 0.1 | 0.8 |

### 7. Evaluation

The following evaluations were performed on the molded products obtained in Examples B1 to B8 and Comparative Examples B1 to B3.

### 7-1. Water absorption characteristics

The molded products of Examples B1 to B8 and Comparative Examples B1 to B3 were placed into a constant temperature bath at 25°C/90%RH so as not to overlap each other, left for 5 minutes, and the moisture content in the molded product at that time was determined and evaluated according to the following criteria. It can be said that the higher the moisture content, the better the water absorption characteristics.
A: Moisture content is 20% by mass or more.
B: Moisture content is 10% by mass or more and less than 20% by mass.
C: Moisture content is less than 10% by mass.

### 7-2 Specific tensile strength

The molded products of Examples B1 to B8 and Comparative Examples B1 to B3 were measured according to JIS P8113 using G80 (manufactured by Mitsubishi Paper Mills Limited), and specific tensile strengths thereof were determined and evaluated according to the following criteria.
A: Specific tensile strength is 20 N·m/g or higher.
B: Specific tensile strength is 10 N·m/g or higher and lower than 20 N·m/g.
C: Specific tensile strength is lower than 10 N·m/g.

These results are summarized in Table 4.

**Table 4**

| | Water absorption characteristics | Specific tensile strength |
|---|---|---|
| Example B1 | B | A |
| Example B2 | A | A |
| Example B3 | A | A |
| Example B4 | A | A |
| Example B5 | D | D |
| Example B6 | A | C |
| Example B7 | B | A |
| Example B8 | A | A |
| Comparative Example B1 | C | C |
| Comparative Example B2 | B | C |
| Comparative Example B3 | C | C |

As is clear from Table 4, excellent results were obtained in Examples B1 to B8. Furthermore, in Examples B1 to B8, the molded product could be suitably produced by using a molded product producing device smaller than that of the related art. On the other hand, in Comparative Examples B1 to B3, satisfactory results were not obtained.

When the molded product was produced in the same manner as described above except that the heating temperature in the molding step was variously changed in a range of 60°C or higher and 180°C or lower, and the same evaluation as described above was performed, the same results as described above were obtained. When the molded product was produced in the same manner as described above except that the pressurization in the molding step was variously changed in a range of 0.1 MPa or higher and 100 MPa or lower, and the same evaluation as described above was performed, the same results as described above were obtained. When the molded product was produced in the same manner as described above except that the humidification amount in each humidifying section is adjusted, and the ratio of the mass of moisture contained in the second web M8 to the mass of the second web M8 in a state of being humidified by the humidifying section 236 was variously changed in a range of 15% by mass or more and 50% by mass or less, the same results as described above were obtained. When the molded product was produced in the same manner as described above except that the use ratio of the raw material M1A and the raw material M1B was variously changed so that the mixing ratio of the second fibers with respect to the produced composite was in a range of 200% or more and 1000% or less in terms of mass ratio, and a content of the starch with respect to a total amount of the molded product was variously changed in a range of 3.0% by mass or more and 20.0% by mass or less.

## Claims

1. A composite used as a raw material for dry molding comprising:
a cellulose fiber; and
a starch, wherein
at least a part of the starch is fused to the cellulose fiber, and
a content of the starch is 30.0% by mass or more and 50.0% by mass or less with respect to a total amount of the composite.

2. The composite according to claim 1, wherein a weight-average molecular weight of the starch is 40,000 or higher and 400,000 or lower.

3. A molded product comprising the composite according to claim 1.

4. The molded product according to claim 3, wherein the molded product is formed in a sheet shape.

5. A method for producing a molded product, the method comprising:
a mixing step of mixing a fiber and the composite according to claim 1 to obtain a mixture,
a humidifying step of humidifying the mixture at least once, and
a molding step of obtaining a molded product by pressurizing and heating the humidified mixture.

6. The method for producing a molded product according to claim 5, wherein a content of the starch is 3.0% by mass or more and 20.0% by mass or less with respect to a total amount of the molded product.

7. The method for producing a molded product according to claim 5, wherein a moisture content of the mixture at the end of the humidifying step is 10% by mass or more and 50% by mass or less.

8. The method for producing a molded product according to claim 5, wherein the composite subjected to the molding step contains a defibrated material obtained by defibrating a composite sheet containing a cellulose fiber and a starch fused to the cellulose fiber.
